# EUROPÄISCHE PATENTSCHRIFT

(11) **EP 3 069 839 B1**
(45) Veröffentlichungstag und Bekanntmachung des Hinweises auf die Patenterteilung: **19.07.2017**
(21) Anmeldenummer: 16160779.1
(22) Anmeldetag: 16.03.2016
(51) Int. Cl.: B29B 17/04, B02C 18/14, B02C 13/14

(54) **VERFAHREN ZUR ZERKLEINERUNG VON WÄRMEEMPFINDLICHEM AUFGABEGUT**
METHOD FOR THE GRINDING OF HEAT-SENSITIVE DISPENSED MATERIAL
PROCEDE DE BROYAGE DE MATERIAUX DE CHARGEMENT THERMOSENSIBLES

(30) Priorität: 16.03.2015 DE 102015003260
(43) Veröffentlichungstag der Anmeldung: 21.09.2016
(73) Patentinhaber: PALLMANN MASCHINENFABRIK GmbH & Co. KG, 66482 Zweibrücken (DE)
(72) Erfinder: Pallmann, Hartmut, 66482 Zweibrücken (DE)
(74) Vertreter: Kurz, Andreas

(56) Entgegenhaltungen:
- EP-A1- 0 796 709
- WO-A1-2008/058730
- DE-C1- 19 715 772
- GB-A- 2 310 213

## Beschreibung

### Technisches Gebiet

Die Erfindung betrifft ein Verfahren zur Zerkleinerung von wärmeempfindlichem Aufgabegut, insbesondere zur Feinmahlung von Thermoplasten, Gummi, Kautschuk und Elastomere auf eine Partikelgröße von kleiner als 500 µm, vorzugsweise von kleiner als 425 µm, gemäß dem Oberbegriff des Patentanspruchs 1.

### Stand der Technik

Bei der Zerkleinerung von Aufgabegut wird ein beträchtlicher Teil der zur Zerkleinerung aufzubringenden Energie in Wärme umgewandelt. Ursache hierfür sind Schneid-, Reib- und Aufprallkräfte, denen das Aufgabegut im Zuge der Zerkleinerung unterworfen wird. Bei der Zerkleinerung von wärmeempfindlichem Aufgabegut ist es zur Vermeidung einer thermischen Schädigung daher notwendig, das Aufgabegut zu kühlen und/oder den Wärmeeintrag durch Verringerung der Produktionsleistung zu mindern.

Bei luftdurchströmten Zerkleinerungsvorrichtungen erfolgt eine Kühlung des Aufgabeguts durch den für den Transport des Aufgabeguts innerhalb der Vorrichtung notwendigen Luftstrom. Diese sogenannte Eigenluft kann von der Vorrichtung selbst erzeugt und gegebenenfalls durch ein Sauggebläse unterstützt werden. Bei wärmeunempfindlichem Aufgabegut reicht die bekannten Vorrichtungen immanente Eigenluftdurchströmung aus, um die Zerkleinerungswerkzeuge so stark abzukühlen, dass eine Beeinträchtigung des Aufgabeguts ausgeschlossen ist.

Probleme stellen sich regelmäßig dann, wenn wärmeempfindliches Aufgabegut zerkleinert werden soll. Insbesondere bei der Zerkleinerung von Materialien mit niedrigem Erweichungspunkt wie zum Beispiel Thermoplasten werden die Betreiber gattungsgemäßer Vorrichtungen vor eine schwierige Aufgabe gestellt. Um eine möglichst hohe Maschinenleistung zu erzielen, soll eine Vermahlung des Aufgabeguts bei maximal möglicher Temperatur stattfinden. Wird dabei die materialabhängige Grenztemperatur überschritten, so kommt es zu einem Erweichen und Anschmelzen des Aufgabeguts mit der Folge, dass einzelne Partikel agglomerieren und dadurch Korngröße und Kornverteilung des zerkleinerten Guts nicht mehr in dem gewünschten Bereich liegen. Oder es kommt zu einer thermischen Zersetzung des Aufgabeguts, wobei die über die Grenztemperatur erwärmten Partikel an den Maschinenteilen und insbesondere den Zerkleinerungswerkzeugen anbacken, so dass sowohl die Maschinenleistung als auch die Qualität des Endprodukts darunter leiden.

Zur Vermeidung einer thermischen Schädigung des Aufgabeguts bei dessen Zerkleinerung ist es bekannt, die Maschinenleistung von Zerkleinerungsvorrichtungen herabzusetzen. Dadurch wird pro Zeiteinheit weniger Zerkleinerungsarbeit geleistet und somit weniger Wärmeüberschuss produziert. Dabei muss jedoch in Kauf genommen werden, dass die Zerkleinerungsvorrichtung nicht voll ausgelastet ist, was der grundsätzlichen Forderung nach einem wirtschaftlichen Betrieb solcher Vorrichtungen widerspricht.

Diese Problematik stellt sich verstärkt bei der Feinmahlung, denn es hat sich gezeigt, dass je feiner das herzustellende Endprodukt ist, desto mehr Zerkleinerungsarbeit muss geleistet werden und desto größer ist der Wärmeeintrag in das Aufgabegut.

Eine Erhöhung der Kühlwirkung durch Vergrößerung des Eigenluftanteils einer gattungsgemäßen Zerkleinerungsvorrichtung, um zusätzlich Wärme abführen zu können, ist nur in engen Grenzen möglich, da der Eigenluftanteil die Strömungsgeschwindigkeit und damit die Aufenthaltszeit des Mahlguts in der Mahlzone bestimmt und damit auch die Feinheit des Endprodukts.

Bei der Feinmahlung bestimmter Materialien wie zum Beispiel Gummi, Kautschuk und Elastomere stellt sich zudem das Problem, dass eine Mahlung des Aufgabeguts aufgrund deren elastischer Eigenschaften nicht ohne weiteres möglich ist. Aus diesem Grund ist man in diesen Fällen auch schon dazu übergegangen, das Aufgabegut durch Zugabe eines Kühlmittels auf Temperaturen weit unterhalb des Gefrierpunkts abzukühlen. Die damit einhergehende Verspröden des Aufgabeguts erlaubt dann eine Zerkleinerung der versprödeten Partikel im Wege des Brechens (Kryogenzerkleinerung). Da das Abkühlen des Aufgabeguts auf die erforderlichen Niedrigtemperaturen beträchtliche Mengen an Kühlmittel erfordert, erweist sich diese Art der Zerkleinerung als sehr kostenintensiv. Darüber hinaus ergibt die Kryogenzerkleinerung ein Endprodukt, dessen Partikel sich durch eine kubische Form mit verhältnismäßig glatter Oberfläche auszeichnen. Diese Materialeigenschaften sind jedoch für manche Verwendungen des Endprodukts nachteilig, insbesondere wenn die Fähigkeit gefragt ist, einen möglichst innigen Verbund mit anderen Materialien einzugehen.

Aus der DE 197 15 772 C1 ist eine Verfahren und eine Vorrichtung zum Aufbereiten von Abfallprodukten auf Kunststoffbasis bekannt. Die Abfallprodukte werden zunächst einer Vorzerkleinerung in einem Shredder unterzogen und das dabei gewonnene Rohmahlgut in einem Vorratsbehälter zwischengespeichert. Anschließend wird das Rohmahlgut zur weiteren Zerkleinerung einer Prallwirbelmühle zugeführt. Die im Mahlgut enthaltenen unterschiedlichen Stoffe werden in nachfolgenden Stationen getrennt und als Sekundärrohstoff einer Wiederverwertung zugeführt. Dabei ist auch schon erkannt worden, dass durch den Mahlvorgang in der Prallwirbelmühle Reibungswärme entsteht, die zwar für eine Trocknung des Mahlguts wünschenswert ist, dabei die Mahlluft aber dennoch nicht zu heiß werden soll. Um die Temperatur der Mahlluft in einem Bereich zwischen 70° C und 92° C zu halten, wird vorgeschlagen, der Mahlluft im Zulauf zur Prallwirbelmühle Wasser zuzuführen.

Ferner offenbart die DE 37 08 914 A1 eine Schlagmühle zur Zerkleinerung von Mahlgut mit einem innerhalb eines Gehäuses angeordneten, mit Schlagwerkzeugen bestückten Rotor. Dem Rotor wird das Mahlgut über eine Zufuhröffnung aufgegeben und nach dessen Zerkleinerung einer Separiereinrichtung zugeleitet. Die Dosierung der Schlagmühle mit Mahlgut erfolgt dabei in Abhängigkeit der Leistungsaufnahme des Antriebs für den Rotor, indem bei zu hoher Stromaufnahme des Antriebs die Zufuhr gedrosselt wird.

### Kurzbeschreibung der Erfindung

Vor diesem Hintergrund besteht die Aufgabe der Erfindung darin, eine Möglichkeit zur Zerkleinerung von wärmeempfindlichem Aufgabegut auf einen Durchmesser von maximal 500 µm zu schaffen, vorzugsweise von maximal 425 µm, ohne das Aufgabegut dabei unter den Gefrierpunkt kühlen zu müssen.

Diese Aufgabe wird durch ein Verfahren mit den Merkmalen des Patentanspruchs 1 gelöst.

Vorteilhafte Ausführungsformen ergeben sich aus den Unteransprüchen.

Ausgangspunkt für vorliegende Erfindung bilden Verfahren auf Basis der Kryogenzerkleinerung von Aufgabegut, da die Fachwelt bis dato der einhelligen Meinung war, dass eine Zerkleinerung von Partikeln auf einen Durchmesser unter 500 µm, vorzugsweise unter 425 µm, auf anderem Wege nicht möglich sei. Es ist das Verdienst der Erfindung, sich von dieser Vorstellung gelöst und ein Verfahren entwickelt zu haben, das eine Feinmahlung wärmeempfindlicher Materialien bei Temperaturen weit über 0° C erlaubt. Eine kryogene Zerkleinerung und damit der kostenintensive Einsatz von speziellen Kühlmitteln wie zum Beispiel von flüssigen Stickstoffs ist dadurch entbehrlich, was einen erheblichen wirtschaftlichen Vorteil mit sich bringt.

Ein weiterer Vorteil gegenüber einer kryogenen Zerkleinerung beruht auf der unterschiedlichen Wirkungsweise der erfindungsgemäßen Art der Zerkleinerung. Während bei der kryogenen Zerkleinerung durch Verspröden des Aufgabeguts ein Brechen der Gutpartikel unter Einwirkung von Schlagenergie erreicht wird, werden die Gutpartikel beim erfindungsgemäßen Verfahren im Wesentlichen durch Reißen zerkleinert. Die Folge ist eine unregelmäßige Gestalt der zerkleinerten Gutpartikel mit rauer Oberfläche, was bei einer weiteren Verwendung dieser Partikel deren Verbundeigenschaften mit anderen Materialien enorm verbessert.

Gemäß der Erfindung erfolgt eine kontinuierliche Kühlung des Aufgabeguts jeweils über den mengenmäßig von der Eigenluft der Zerkleinerungsvorrichtung bzw. Feinmahlvorrichtung abhängigen, konstanten Produktgasstrom PG₁ bzw. PG₂ der im Regelfall aus der Umgebungsluft abgezeigt wird. Zum einen reicht jedoch dessen Kühlvermögen nicht aus, um wärmeempfindliches Aufgabegut ausreichend zu kühlen; zum anderen schwankt dessen Kühlvermögen in Abhängigkeit von Luftfeuchte und Lufttemperatur. Aus diesem Grund sieht die erfindungsgemäße Lösung jeweils eine dynamische Ergänzung der Kühlleistung durch gezielte Zugabe eines Kühlmittels zum Zerkleinerungs- bzw. Feinmahlprozess vor bei gleichzeitiger Überwachung der Temperatur vor und/oder während und/oder nach der Vorzerkleinerung bzw. Feinmahlung. Vorzugsweise wird als Kühlmedium Wasser verwendet, das als Nebel, Sprühnebel oder Strahl dem Gutstrom zugeführt wird.

Sollten diese beide Maßnahmen zur Temperaturregelung noch nicht ausreichen, so ist erfindungsgemäß vorgesehen, die Maschinenleistung der Vorzerkleinerung und/oder Feinmahlung zu drosseln. Zu diesem Zweck wird die maximale Energieaufnahme der Zerkleinerungsvorrichtung bzw. Feinmahlvorrichtung, die als Führungsgröße in einem Regelkreis zur Bestimmung der Menge des zu dosierenden Aufgabeguts dient, herabgesetzt. Auf diese Weise wird die Menge an zugeführtem Aufgabegut reduziert und so einer Wärmeentwicklung entgegengewirkt.

Zum Abzug des Aufgabeguts aus der Vorzerkleinerung und/oder Feinmahlung ist gemäß einer vorteilhaften Ausführungsform eine Absaugung vorgesehen. Die Absaugung wird im Wesentlichen von mit Unterdruck beaufschlagten Saugleitungen gebildet, die an den Gutauslauf der jeweiligen Maschine anschließen und in denen das Aufgabegut abtransportiert wird. Bei diesem Vorgang kann dem Gutstrom zusätzlich Wasser zugeführt werden, mit dem Vorteil, dass ein unerwünschter Temperaturanstieg verhindert wird. Gleichzeitig kann dabei erreicht werden, dass die Partikel mit einem Wasserfilm überzogen sind, was der Neigung der Gutpartikel zum Agglomerieren entgegenwirkt. Es hat sich gezeigt, dass dies enorme Vorteile beim Transport, der Lagerung, der Siebung und dem Absacken des Aufgabeguts bzw. dem Endprodukt mit sich bringt.

### Beschreibung der Ausführungsarten

Die Erfindung wird nachstehend anhand eines Ausführungsbeispiels näher erläutert, wobei weitere Merkmale und Vorteile des Verfahrens offenbar werden. Das Ausführungsbeispiel betrifft die Aufbereitung eines Gummirecyclats zu Gummimehl, das in den Produktionskreislauf zurückgeführt wird.

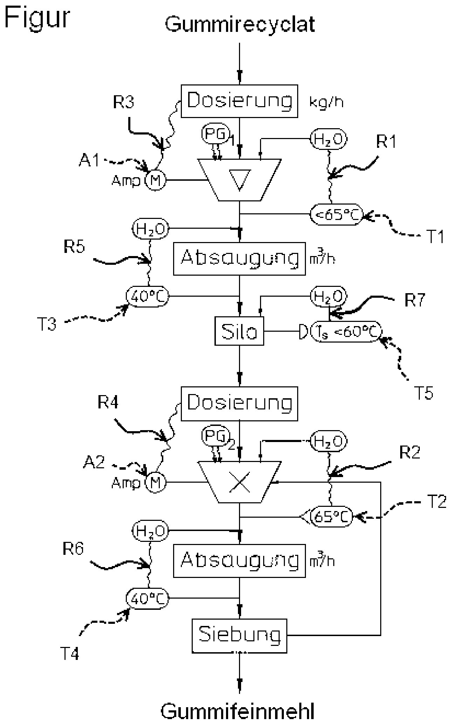

Der Ablauf des erfindungsgemäßen Verfahrens geht aus dem in der Figur dargestellten Flussdiagramm hervor. Ausgangsmaterial für das erfindungsgemäße Verfahren sind im vorliegenden Ausführungsbeispiel Gummireste, beispielsweise Schälgummi wie er bei der Altreifenaufbereitung anfällt, mit einer Stückgröße von etwa 10 mm bis 20 mm. Dieses Aufgabegut wird über eine Dosierstation einer Vorzerkleinerung zugeführt, wo das Aufgabegut auf eine Partikelgröße von maximal 4 mm, vorzugsweise maximal 2 mm, vorzerkleinert wird. Die Vorzerkleinerung erfolgt vorzugsweise in einer Messermühle oder Schneidmühle, deren elektrisch angetriebener Rotor mit Messern bestückt ist. Der Rotor ist von einem Siebkorb umgeben, der das Aufgabegut solange im Wirkbereich der Messer hält, bis eine Zerkleinerung unter den Lochdurchmesser des Siebs erfolgt ist. Nach ausreichender Zerkleinerung des Aufgabeguts werden die Gutpartikel im Prozessgasstrom PG₁ aus der Vorzerkleinerung abgezogen. Im Zuge der Zerkleinerung wird lediglich ein Teil der Antriebsenergie zur Gutzerkleinerung verwendet, der übrige Teil wird in Wärmeenergie umgewandelt, die für den Temperaturanstieg des Aufgabeguts ursächlich ist.

Gemäß der Erfindung wird dabei durch kombinierte Kühlmaßnahmen einer thermischen Schädigung des Aufgabeguts vorgebeugt. Ein Teil der überschüssigen Wärmeenergie wird durch den volumenkonstanten Prozessgasstrom PG₁ abgeführt, dessen primäre Aufgabe es ist, den Transport des Aufgabeguts zur und aus der Zerkleinerungszone zu besorgen. Über einen stromabwärts der Vorzerkleinerung angeordneten Temperatursensor wird die Temperatur T₁ des Aufgabeguts beim Austritt aus der Vorzerkleinerung überwacht.

Wenn die Kühlwirkung der Eigenluft bei der gegebenen Auslastung der Zerkleinerungsvorrichtung nicht genügt, was durch einen Anstieg der Temperatur T₁ feststellbar ist, dann wird dem Gutstrom vor und/oder während und/oder nach der Vorzerkleinerung Wasser als Kühlmittel zugeführt, das dem Aufgabegut durch Verdunstung Wärme entzieht. Über einen ersten Regelkreis R₁ wird die Menge an Kühlmittel so geregelt, dass die Temperatur T₁ unterhalb eines vorbestimmten Sollwerts bleibt, beispielsweise unterhalb 70° C, vorzugsweise unterhalb 65° C, höchstvorzugsweise unterhalb 55° C. Der Materialstrom im Auslauf der Vorzerkleinerung weist dabei eine Eigenfeuchte von etwa 3 % bis 5 % auf.

Genügen diese Maßnahmen zur Einhaltung der Temperatur T₁ nicht, so wird die Dosierung der Zerkleinerungsvorrichtung in einem Regelkreis R₃ in Abhängigkeit der elektrischen Stromaufnahme geregelt. Durch die Reduzierung des Sollwerts für die maximale Stromaufnahme A₁ der Zerkleinerungsvorrichtung, erfolgt eine Beschränkung der der Vorzerkleinerung zugeführten Menge an Aufgabegut und damit auch ein Beschränkung der Wärmeentwicklung.

Das vorzerkleinerte Aufgabegut wird über eine Absaugung aus der Vorzerkleinerung abgezogen und zur Zwischenlagerung einem Silo zugeleitet. Anlagentechnisch schließt die Absaugung an den Gutauslauf der Zerkleinerungsvorrichtung an. Zur weiteren Reduzierung der Temperatur des Aufgabeguts auf einen Wert T₃ wird im Bereich der Absaugung erneut Wasser zugeführt. Die Menge an zugeführtem Wasser wird in einem Regelkreis R₅ bestimmt, bei dem die vorhandene Guttemperatur im Bereich der Absaugung mit der Temperatur T₃ verglichen und bei Abweichung ein Regelsignal ausgegeben wird. Die Temperatur des vorzerkleinerten Aufgabeguts vor seiner Zwischenlagerung beträgt maximal 45° C, vorzugsweise maximal 40° C, und liegt vorzugsweise zwischen 20° und 35° C. Die Eigenfeuchte beträgt 10% bis 15%.

Als Sicherheitsmaßnahme zur Vermeidung eines Schwelbrands besteht bei der Zwischenlagerung des vorzerkleinerten Aufgabeguts im Silo die Möglichkeit, erneut Wasser zugegeben bzw. das Silo zu fluten. Zu diesem Zweck wird in einem Regelkreis R₇ die Temperatur des vorzerkleinerten Aufgabeguts überwacht und bei Überschreiten eines Grenzwerts T₅ Wasser zugeführt. Der Grenzwert T₅ liegt beispielsweise bei maximal 75° C, vorzugsweise bei maximal 60° C.

Mittels einer zweiten Dosierstation wird das vorzerkleinerte Aufgabegut aus dem Silo der Feinmahlung zugeführt. Das Aufgabegut besitzt dabei eine Temperatur von etwa 20° bis 30° C bei einer Eigenfeuchte von 5 % bis 10 %.

Die sich anschließende Feinmahlung kann beispielsweise in einer Turbomühle geschehen, deren rotierende Schlagplatten ein hochturbulentes Wirbelfeld erzeugen, in dem die Gutpartikel hohen, die Zerkleinerung bewirkenden Beschleunigungs- und Prallkräften ausgesetzt sind. Auch hier trägt die Eigenluft der Mühle, die den Zerkleinerungsraum als volumenkonstanten Prozessgastrom PG₂ durchströmt, einen ersten Anteil zur Kühlung des Aufgabeguts bei.

Übersteigt die Guttemperatur einen Grenzwert T₂, der stromabwärts der Mahlzone beim Austritt aus der Feinmahlung überwacht wird, dann wird dem Aufgabegut vor der Feinmahlung, beispielsweise im Zulauf zur Mühle, und/oder während des Feinmahlung, beispielsweise in der Mahlzone der Mühle, und/oder nach der Feinmahlung, beispielsweise im Auslauf der Mühle, in einem Regelkreis R₂ Wasser als Kühlmittel zugeführt, bis die Temperatur T₂ erreicht ist. Die Temperatur T₂ beträgt beispielsweise maximal 70° C, vorzugsweise maximal 65° C, höchstvorzugsweise maximal 55° C.

Sollte diese Maßnahme nicht ausreichen, so kann durch Drosselung der Dosierung weiter Einfluss auf die Temperaturentwicklung genommen werden. Zu diesem Zweck wird die maximale Stromaufnahme A₂ der Mühle beschränkt und in einem Regelkreis R₄ überwacht, wie bereits bei der Vorzerkleinerung beschrieben worden ist.

Nach der Feinmahlung weist das Endprodukt zu einem überwiegenden Teil von ca. 90 % bis 99 % eine Partikelgröße von maximal 500 µm auf, vorzugsweise maximal 425 µm, bei einer Temperatur unterhalb T₂ und einer Eigenfeuchte vorzugsweise im Bereich von 0,5 % bis 2 %.

Der Abzug des ausreichend gefeinten Guts aus der Feinmahlung erfolgt wiederum aktiv über eine Absaugung, die anlagentechnisch an den Gutauslauf der Feinmahlvorrichtung anschließt. Zur Absenkung der Guttemperatur auf einen Wert T₄ wird im Bereich der Absaugung erneut Wasser zugeführt. Die Menge an zugeführtem Wasser wird in einem Regelkreis R₆ bestimmt, bei dem die vorhandene Guttemperatur im Bereich der Absaugung mit der Temperatur T₄ verglichen und bei Abweichung ein Regelsignal ausgegeben wird. Als Führungsgröße für den Regelkreis R₆ dient somit die Temperatur T₄, die im vorliegenden Ausführungsbeispiel bei maximal 45° C liegt, vorzugsweise bei maximal 40° C, beispielsweise zwischen 20° C und 35° C. Optional wird durch Nachtrocknung des Guts im Luftstrom der Absaugung eine Eigenfeuchte von maximal 1 % erreicht.

In dem anschließenden Verfahrenschritt wird das die Mühle verlassende Gut gesiebt, wobei Partikel größer als 500 µm, vorzugsweise größer als 425 µm, in die Feinmahlung rückgeführt werden und das ausreichend gefeinte Endprodukt abgepackt wird.

## Patentansprüche

1. Verfahren zur Zerkleinerung von wärmeempfindlichem Aufgabegut, insbesondere von Thermoplasten, Gummi, Kautschuk und Elastomeren, auf eine Partikelgröße von kleiner als 500 µm **gekennzeichnet durch** folgende Verfahrensschritte:
a) Vorzerkleinerung des Aufgabeguts auf eine Größe kleiner als 4 mm in einer von einem ersten Prozessgas PG₁ durchströmten, rotierenden Zerkleinerungsvorrichtung,
wobei in einem ersten Regelkreis R₁ die Temperatur T₁ des vorzerkleinerten Aufgabeguts im Auslauf der Vorzerkleinerung geregelt wird, indem dem Aufgabegut vor und/oder während und/oder nach der Vorzerkleinerung Wasser zugegeben wird, und
b) Feinmahlung des vorzerkleinerten Aufgabeguts auf eine Größe kleiner als 500 µm in einer von einem zweiten Prozessgas PG₂ durchströmten, rotierenden Feinmahlvorrichtung,
wobei in einem zweiten Regelkreis R₂ die Temperatur T₂ des vorzerkleinerten Aufgabeguts im Auslauf der Feinmahlung geregelt wird, indem dem vorzerkleinerten Aufgabegut vor und/oder während und/oder nach der Feinmahlung Wasser zugegeben wird.

2. Verfahren nach Anspruch 1, **dadurch gekennzeichnet, dass** in einem dritten Regelkreis R₃ die Dosierung des Aufgabeguts zur Zerkleinerungsvorrichtung in Abhängigkeit der Energieaufnahme A₁ der Zerkleinerungsvorrichtung geregelt wird.

3. Verfahren nach Anspruch 1 oder 2, **dadurch gekennzeichnet, dass** in einem vierten Regelkreis R₄ die Dosierung des vorzerkleinerten Aufgabeguts zur Feinmahlvorrichtung in Abhängigkeit der Energieaufnahme A₂ der Feinmahlvorrichtung geregelt wird.

4. Verfahren nach einem der Ansprüche 1 bis 3, **dadurch gekennzeichnet, dass** das zerkleinerte Aufgabegut aus der Zerkleinerungsvorrichtung abgesaugt wird, wobei in einem fünften Regelkreis R₅ die Temperatur T₃ im Bereich der Absaugung durch Zugabe von Wasser im Bereich der Absaugung und/oder im Gutauslauf der Zerkleinerungs-vorrichtung geregelt wird.

5. Verfahren nach einem der Ansprüche 1 bis 4, **dadurch gekennzeichnet, dass** das zerkleinerte Aufgabegut aus der Feinmahlvorrichtung abgesaugt wird, wobei in einem sechsten Regelkreis R₆ die Temperatur T₄ im Bereich der Absaugung durch Zugabe von Wasser im Bereich der Absaugung und/oder im Gutauslauf der Feinmahlvorrichtung geregelt wird.

6. Verfahren nach einem der Ansprüche 1 bis 5, **dadurch gekennzeichnet, dass** das zerkleinerte Aufgabegut vor der Feinmahlung zwischengespeichert wird, wobei in einem siebten Regelkreis R₇ die Temperatur T₅ im Zwischenspeicher überwacht wird.

7. Verfahren nach einem der Ansprüche 1 bis 6, **dadurch gekennzeichnet, dass** die Temperatur T₁ und/oder die Temperatur T₂ maximal 70° C beträgt, vorzugsweise maximal 65° C, höchstvorzugsweise maximal 55° C.

8. Verfahren nach einem der Ansprüche 4 bis 7, **dadurch gekennzeichnet, dass** die Temperatur T₃ und/oder die Temperatur T₄ maximal 45° C beträgt, vorzugsweise maximal 40° C, höchstvorzugsweise maximal 35° C.

9. Verfahren nach einem der Ansprüche 6 bis 8, **dadurch gekennzeichnet, dass** die Temperatur T₅ maximal 75° C beträgt, vorzugsweise maximal 60° C.

10. Verfahren nach einem der Ansprüche 1 bis 9, **dadurch gekennzeichnet, dass** der erste Prozessgasstrom PG₁ und/oder der zweite Prozessgasstrom PG₂ volumenkonstant sind.

## Claims

1. A method for comminuting heat-sensitive feedstock, particularly thermoplastics, rubber, caoutchouc and elastomers to a particle size of less than 500 µm, **characterised by** the following processing steps :
a) Precomminuting the feedstock to a size smaller than 4 mm in a rotating comminuting device through which a first process gas PG₁ flows,
regulating a first temperature T₁ of the precomminuted feedstock in the outlet of the precomminution in a first control circuit R₁ by adding water to the feedstock before and/or during and/or after the precomminution.
b) Fine grinding the precomminuted feedstock to a size smaller than 500 µm in a rotating fine grinding device through which a second process gas PG₂ flows and
regulating a second temperature T₂ of the precomminuted feedstock in the outlet of the fine grinding in a second control circuit R₂ by adding water to the precomminuted feedstock before and/or during and/or after the fine grinding.

2. The method according to claim 1, **characterised in that** the metering of the feedstock to the comminuting device is regulated in a third control circuit R₃ as a function of the energy consumption A₁ of the comminuting device.

3. The method according to claim 1 or 2, **characterised in that** the metering of the precomminuted feedstock to the fine grinding device is regulated in a fourth control circuit R₄ as a function of the energy consumption A₂ of the fine grinding device.

4. The method according to one of the claims 1 to 3, **characterised in that** the comminuted feedstock is removed from the comminuting device by suction and wherein a third temperature T₃ in the suction area is regulated in a fifth control circuit R₅ by adding water in the suction area and/or in the material outlet of the comminuting device.

5. The method according to one of the claims 1 to 4, **characterised in that** the comminuted feedstock is removed from the fine grinding device by suction and wherein a temperature T₄ in the suction area is regulated in a sixth control circuit R₆ by adding water in the suction area and/or in the material outlet of the fine grinding device.

6. The method according to one of the claims 1 to 5, **characterised in that** the comminuted feedstock is temporarily stored before the fine grinding, and wherein a fifth temperature T₅ in the intermediate storage facility is monitored in a seventh control circuit R₇.

7. The method according to one of the claims 1 to 6, **characterised in that** the temperature T₁ and/or the temperature T₂ are at most 70° C, preferably at most 65° C, or most preferably at most 55° C.

8. The method according to one of the claims 4 to 7, **characterised in that** the temperature T₃ and/or the temperature T₄ are at most 45° C, preferably at most 40° C, or most preferably at most 35° C.

9. The method according to one of the claims 6 to 8, **characterised in that** the temperature T₅ is at most 75° C, or preferably at most 60° C.

10. The method according to one of the claims 1 to 9, **characterised in that** the first process gas stream PG₁ and/or the second process gas stream PG₂ are constant in terms of volume.

## Revendications

1. Procédé pour le broyage de matériaux d'alimentation thermosensibles, en particulier de thermoplastes, de caoutchouc vulcanisé et synthétique et d'élastomères à une granulométrie inférieure à 500 µm **caractérisé par** les étapes de procédé suivantes:
a) Broyage préalable du matériau d'alimentation à une granulométrie intérieure à 4 mm dans un dispositif rotatif de broyage dans lequel circule un gaz de procédé PG₁,
au cours duquel un premier circuit de régulation R₁ règle la température T₁ du matériau d'alimentation préalablement broyé à la sortie du broyage préalable en ajoutant de l'eau au matériau d'alimentation avant et/ou pendant le broyage préalable et/ou après le broyage préalable.
b) Broyage fin du matériau préalablement broyé jusqu'à obtention d'une granulométrie inférieure à 500 µm dans un dispositif rotatif de broyage fin dans lequel circule un second gaz de procédé PG₂,
au cours duquel un second circuit de régulation R₂ règle la température T₂ du matériau préalablement broyé à la sortie du broyage fin en ajoutant de l'eau au matériau d'alimentation avant et/ou pendant le broyage fin et/ou après le broyage fin.

2. Procédé selon la revendication 1, **caractérisé en ce qu'**un troisième circuit de régulation R₃ règle le dosage du matériau d'alimentation dans le dispositif de broyage en fonction de la consommation énergétique A₁ du dispositif de broyage.

3. Procédé selon la revendication 1 ou 2, **caractérisé en ce qu'**un quatrième circuit de régulation R₄ règle le dosage du matériau préalablement broyé dans le dispositif de broyage fin en fonction de la consommation énergétique A₂ du dispositif de broyage fin.

4. Procédé selon l'une des revendications 1 à 3, **caractérisé en ce que** le matériau broyé est aspiré hors du dispositif de broyage et qu'un cinquième circuit de régulation R₅ règle la température T₃ au niveau de l'aspiration par l'adjonction d'eau au niveau de l'aspiration et/ou au niveau de la sortie du matériau au niveau du dispositif de broyage.

5. Procédé selon l'une des revendications 1 à 4, **caractérisé en ce que** le matériau d'alimentation broyé est aspiré hors du dispositif de broyage fin et qu'un sixième circuit de régulation R₆ règle la température T₄ au niveau de l'aspiration par adjonction d'eau au niveau de l'aspiration et/ou de la sortie du matériau du dispositif de broyage fin.

6. Procédé selon l'une des revendications 1 à 5 **caractérisé en ce que** le produit issu du broyage préalable est stocké avant le broyage fin et qu'un septième circuit de réglage R₇ surveille la température T₅ durant le stockage intermédiaire.

7. Procédé selon l'une des revendications 1 à 6, **caractérisé en ce que** la température T₁ et/ou la température T₂ sont d'au maximum 70° C, de préférence d'au maximum 65° C, de toute préférence d'au maximum 55° C.

8. Procédé selon l'une des revendications 4 à 7, **caractérisé en ce que** la température T₃ et/ou la température T₄ sont d'au maximum 45° C, de préférence d'au maximum 40° C, de toute préférence d'au maximum 35° C.

9. Procédé selon l'une des revendications 6 à 8, **caractérisé en ce que** la température T₅ est d'au maximum 75° C, de préférence d'au maximum 60° C.

10. Procédé selon l'une des revendications 1 à 9, **caractérisé en ce que** le premier gaz de procédé PG₁ et/ou le deuxième gaz de procédé PG₂ ont un volume constant.
